# EUROPEAN PATENT SPECIFICATION

(11) **EP 3 832 549 B1**
(45) Date of publication and mention of the grant of the patent: **03.09.2025**
(21) Application number: 19214013.5
(22) Date of filing: 06.12.2019
(51) Int. Cl.: G06N 3/008, G06N 5/022, G06N 5/025, G06N 7/01, G06N 5/046, G06N 5/048, G06N 5/047

(54) **METHOD AND DEVICE FOR TESTING**
VERFAHREN UND VORRICHTUNG ZUM TESTEN
PROCÉDÉ ET DISPOSITIF DE TEST

(43) Date of publication of application: 09.06.2021
(73) Proprietor: Universität Stuttgart, 70174 Stuttgart (DE)
(72) Inventor: Weyrich, Michael, 70839 Gerlingen (DE); Ebert, Christof, 70569 Stuttgart (DE)
(74) Representative: DREISS Patentanwälte PartG mbB

(56) References cited:
- US-A1- 2014 201 126
- US-A1- 2018 276 278
- WOLSCHKE CHRISTIAN ET AL: "Observation Based Creation of Minimal Test Suites for Autonomous Vehicles", 2017 IEEE INTERNATIONAL SYMPOSIUM ON SOFTWARE RELIABILITY ENGINEERING WORKSHOPS (ISSREW), IEEE, 23 October 2017 (2017-10-23), pages 294 - 301, XP033255396, DOI: 10.1109/ISSREW.2017.46

## Description

The description relates to a method and a device for testing, in particular for validation, homologation or certification of an at least partially autonomous apparatus, a component or an operator thereof.

Methods of artificial intelligence are applied to at least partially autonomous devices to enable supervised or unsupervised autonomous operations. To ensure that the apparatus operates within a given legislative framework and within given general conditions, test cases are applied to the device. In a test case, a reaction of the apparatus to a test situation is compared to a desired reaction to determine a result of the test.

WOLSCHKE CHRISTIAN ET AL: "Observation Based Creation of Minimal Test Suites for Autonomous Vehicles", 2017 IEEE INTERNATIONAL SYMPOSIUM ON SOFTWARE RELIABILITY ENGINEERING WORKSHOPS (ISSREW), IEEE, 23 October 2017 (2017-10-23), pages 294-301, XP033255396, DOI: 10.1109/ISSREW.2017.46 discloses aspects of such methods.

With currently available testing approaches of brute-force it is both time consuming and resource consuming to ensure that the apparatus operates at all times as expected. It is also difficult to provide transparent record of proof of the safe operation. It is therefore desirable to provide an improved testing scheme.

This is achieved by the method and the device according to the independent claims.

In the description, the term testing refers to validation, certification or homologation of an apparatus or to testing and certification of an operator thereof. Testing in this context may also refer to testing a dynamic system. The testing is applicable in the automotive field as well as in the field of aviation or industrial automation.

The apparatus is an at least partially autonomous vehicle or a configurable component thereof. The apparatus may be an aircraft or a robot, in particular a mobile robot. The apparatus may be an at least partially autonomous mobile or stationary robot, an at least partially autonomous land vehicle, an at least partially autonomous air borne vehicle, e.g. a drone, or an at least partially autonomous watercraft.

The term principle in the description refers to a principle defined by a legal framework or a general condition. An example for a principle for an at least partially autonomous vehicle may demand exercise maximum diligence when a child is at the side of a road because the child could step onto the lane unexpectedly.

The term action in the description refers to an action that is presented to the apparatus or a user thereof to prompt for a reaction. In a test environment for an operator, the apparatus may prompt the operator via a human machine interface to perform the reaction. A reaction by the operator may directly influence the behavior of the apparatus or may answer a question posed by a test case. For the at least partially autonomous vehicle, the reaction may be defined by a rule indicating to reduce the speed of the vehicle when a child is detected at a side of a road. The term context in the description refers to aspects of an environment and/or a situation in which the apparatus operates. An example for a situation the at least partially autonomous vehicle operates in may be defined by an image depicting a child standing at a side of a road in the context. Likewise, a video sequence showing the child moving at the side of the road in the context may define a situation. The environment may define a weather condition, e.g. summer, winter, twilight, night, rainfall, snowfall.

The term test case refers to an action and the context for the action. The test case can be executed in a simulation environment or in real world environment.

The term scenario in the description refers to a plurality of contexts or contexts that may be combined with an action to form a concrete situation for the scenario. An exemplary scenario defines situations that are defined by the image depicting the child standing at a side of the road in various weather or illumination conditions including but not limited to rain, snow, sunshine, in twilight, at night, at backlight. Likewise, a video sequence showing the child moving at the side of the road in these conditions may define the situation.

The test case according to the following aspects is defined for testing if a principle is met. More specifically, a test case suitable for testing the principle is determined.

A device for testing is provided in accordance with claim 1**.** Thus, rules for testing can be extracted by the device for testing for testing whether a principle is met depending on scenarios.

The learning arrangement may be adapted to determine a similarity between two scenarios and the modelling arrangement may be adapted to determine, store and/or output the model comprising only one of the two scenarios, when a similarity between the two scenarios is detected and to determine, store and/or output the model comprising both otherwise. Thus, two similar scenarios are not tested twice.

The learning arrangement may be adapted to prompt for user input to determine a similarity between two scenarios and the modelling arrangement may be adapted to determine, store and/or output the model comprising only one of the two scenarios when a similarity between the two scenarios is detected from user input and to determine, store and/or output the model comprising both otherwise. Thus, the similarity may be detected by a human operator interaction.

The learning arrangement may be adapted to determine a linear independent Eigenspace of scenario vectors representing the scenarios, wherein each of the scenario vectors defines a rule for combining at least one action with at least one context. The linear independent Eigenspace of scenario vectors comprises the rules that map actions and contexts to scenarios unequivocally.

The modelling arrangement may be adapted to determine a test case defined by the model depending on the rule. The rule maps the actions and contexts to test cases.

The test case may be defined depending on at least one control signal for the apparatus or a component thereof, or depending on at least one sensor signal, in particular an audio signal, a video signal, a radar sensor signal, an ultrasonic sensor signal or a time of flight sensor signal. Thus, the device may test the respective sensors or a behavior of the apparatus directly.

A corresponding method is provided in accordance with claim 8. Thus, the rule is learned in a training, e.g. from labeled or unlabeled data representing the scenarios and principles. The labels may indicate which scenarios suitable for testing which of the principles. The rules may be determined to match suitable scenarios to the respective principle.

The method may comprise determining a similarity between two scenarios and determining, storing and/or outputting the model comprising only one of the two scenarios, when a similarity between the two scenarios is detected and determining, storing and/or outputting the model comprising both otherwise. This provides a very efficient device for testing.

The method may comprise prompting for user input to determine a similarity between two scenarios and determining, storing and/or outputting the model comprising only one of the two scenarios when a similarity between the two scenarios is detected from user input and determining, storing and/or outputting the model comprising both otherwise. This allows a selection in the process of training the device.

The method may comprise determining a linear independent Eigenspace of scenario vectors representing the scenarios, wherein each of the scenario vectors defines a rule for combining at least one action with at least one context. The method may comprise determining a test case defined by the model depending on the rule.

Preferably, the test case is defined depending on at least one control signal for the at least partially autonomous apparatus or a component thereof, or depending on at least one sensor signal, in particular an audio signal, a video signal, a radar sensor signal, an ultrasonic sensor signal or a time of flight sensor signal.

Further advantageous aspects are derivable from the following description and the drawings. In the drawings
- Fig. 1: depicts a device for testing an apparatus or a component or an operator thereof,
- Fig. 2: schematically depicts aspects of a device for testing an apparatus,
- Fig. 2a: depicts aspects of a creation of a model,
- Fig. 2b: depicts aspects of a creation of elements of a cased-based reasoning database,
- Fig. 2c: depicts aspect of approaches for creating the model,
- Fig. 3: schematically depicts steps in a method for extracting rules,
- Fig. 4: depicts scenarios and their correlation to situations and to a system under test.

The term model refers to a model that is defined by expert knowledge or has been determined using self-learning, **e.g.** from labelled data. The model as described in the following contains a mapping of test cases to principles that shall be tested. The model may be a probabilistic network or computational intelligence. The model may comprise a Bayesian network. Fuzzy logic type I or type II or a machine learning system may be used to implement the model as well. Mapping the Bayesian network to a multi-layer feedforward neural network, conditional probabilities of the Bayesian network may be learned by the Bayesian network from data. A probability distribution may be determined from the Bayesian network model by an analysis of the structure of the network. The model may be based on fuzzy logic (type I or type II) or model dependencies of test cases using Petri nets or similar state based modelling approaches. With such dependencies, experts may define a transparent mapping in the model by rules and assumed or generated probabilities.

Bayesian networks are an example for implementing the model, in particular to model conditional probabilities in a probability distribution. Other methods such as deep neural networks may be used.

The term rule refers to machine-readable rules. Decision trees may represent these rules, by formal logic or by fuzzy logic (type I or type II).

The term general condition refers to conditions that apply to the rules. The general conditions may be implemented in machine-readable form, e.g. by MySQL or SPARQL.

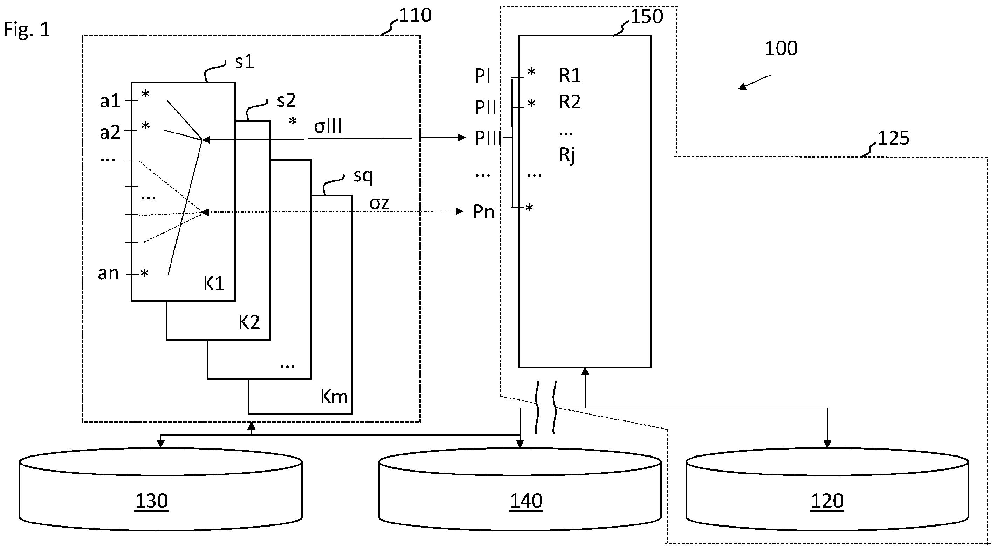

Figure 1 depicts a device 100 for testing an apparatus. The device is applicable for testing of a component of the apparatus or an operator of the apparatus as well. In the device, actions a1, ..., an and contexts K1, ..., Km define test cases. A test case * with actions a1, a2, ... an in context Km is depicted schematically in figure 1. For the test case * a probability σIII is depicted that indicates the relevance of the test case * for testing a principle PIII. In figure 1 a plurality of principles PI, ..., Pn are schematically depicted. Also depicted in figure 1 is another probability σz indicating the relevance of another test case in the context K1 for the principle Pn.

In an exemplary implementation, rules Ri firm up the principles PI, ..., Pn. In an example i = 120 rules may be used. The mapping of principles PI, ..., Pn to rules R1, ..., Ri may be implemented in a lookup table where x indicates a Rule that firms up a certain principle:

| | PI, | PII, | ..., | Pn |
|---|---|---|---|---|
| R1 | x | x | | |
| R2 | | x | | x |
| Ri | x | | | |

To test that a principle PI, ..., Pn is met, a plurality of the actions a1, ..., an are applied in a plurality of contexts K1, ..., Km. To determine to which extend a certain principle is met, the correlation of actions, contexts and rules is evaluated. The correlation is represented by probabilities σI, ..., σz linking actions, contexts and probabilities to principles.

The actions and contexts are mapped to the probabilities in the model. The model is depicted in figure 1 with reference sign 110. A Bayesian network {aj, σj, kj} may represent the model, where j is an index for a link to a particular principle Pj. The Bayesian network may be trained based on test cases e.g. by a training method for artificial neural networks. Test cases for the training are for example determined depending on a rule-based model 120, for instance a fuzzy set model (type I or type II), and/or depending on a relational database 150 or a case-based reasoning database 130. The test cases may be stored in the case-based reasoning database 130 or a relational database 140 as well. The test cases * are for example stored with and accessible by an index.

The mapping of contexts K1, ..., Km and actions a1, ..., an to test cases * may be implemented in a lookup table:

| | a1, | | a2, | ..., | an |
|---|---|---|---|---|---|
| K1 | *11 | *12 | | *1n | |
| K2 | *21 | *22 | | *2n | |
| ... | | | | | |
| Km | *m1 | *m2 | | *mn | |

By way of example, a rule Rj concretizes a principle Pj as follows:
Pj: "Child at the side of the road could step onto the lane unexpectedly, therefore exercise maximum diligence".
Rj: "IF child at side of road THEN drive slowly".

Preferably, the rational database 150 and the rule-based model 120 are a predefined set of fundament principals manually created based on legal and ethical aspects. They form a basis against which the apparatus 160 or the user thereof has to be tested. The rational database 150 and the rule-based model 120 may be merged to a to a relational database 125 which contains principles Pj and corresponding action rules Rj.

The case-based reasoning data-base 130 in this example contains an amount x of video data Rjx for different contexts Kx of the contexts K1, ..., Km. The contexts are e.g. video data of different children, a group of children, holding the hand of an adult, with a bicycle, in summer, in snow, in dim light.

The relational database 140 in this example contains labelled test cases, e.g. the video data with the corresponding label. A human may label the video data appropriately.

In this example, the conditional probability σj provides a statement for the corresponding actions aj and context Kj. In other words, the conditional probability σj provides the probability for violating the principle Pj in different context Kj of the contexts K1, ... Km. The context Kj may for example define "summer in Arizona", "winter in the Black Forrest".

In the example, the principle Pj is the index for the corresponding rules from the table above. In other words, the rules Ri for the principle Pj are determined from the table. In addition, the test case, i.e. the action ai and the context Ki, are determined depending on the rule Ri.

For complex scenarios, a plurality of actions and contexts may be required to cover the principles Pi. The rules Ri with a high probability σi may be used to define the complex scenarios. For example the actions "A Child standing at the side of the road" is combined with one or more of the contexts "in winter", "in summer", "in twilight", "at night", "in the rain" or a combination thereof.

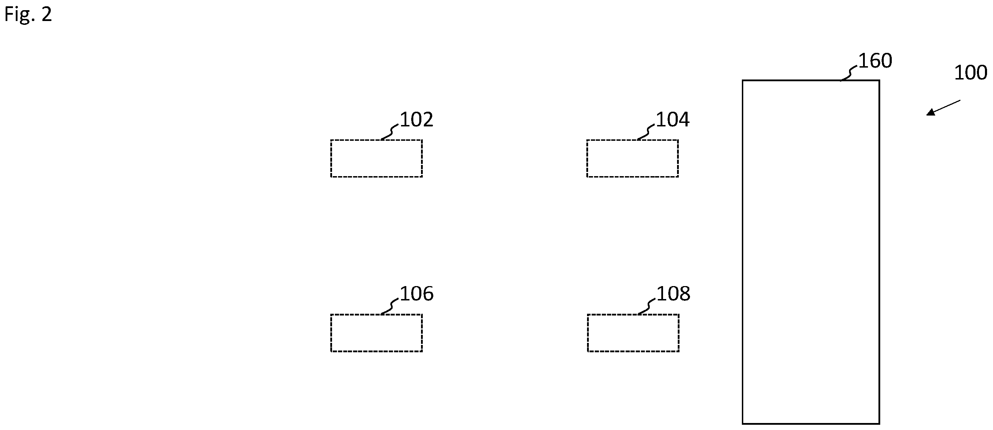

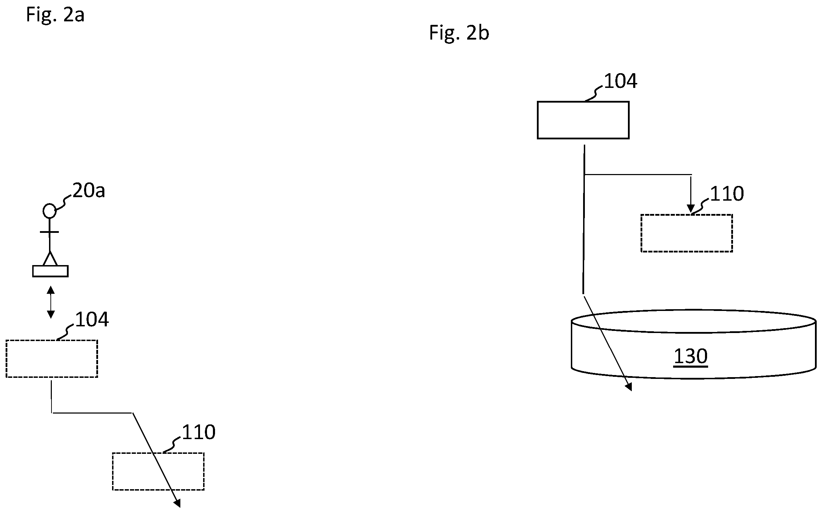

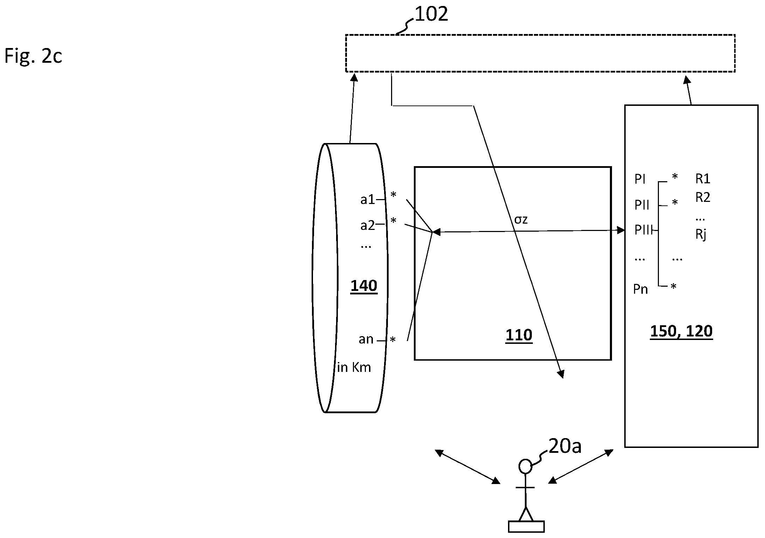

The test cases * are applied for example at an at least partially autonomous apparatus 160 for testing. The device 100 for testing at the at least partially autonomous apparatus 160 is depicted in figure **2****.**

The device 100 comprises a learning arrangement 102. The device 100 comprises a modelling arrangement 104, a selecting arrangement 106 and a testing arrangement 108.

The learning arrangement 102 may be adapted to determine at least one rule from scenarios and principles and/or reactions observed for the apparatus 160 in response to a test case. Each of the rules maps the actions a1, ..., an and contexts K1, ..., Km to a test case. Different previously unknown actions or contexts may be implemented. The scenarios and/or principles may be labeled data provided to the learning arrangement 102.

The learning arrangement 102 may be adapted to determine the at least one rule depending on the rule-based model 120, **e.g.** the fuzzy set model (type I or type II).

Figure 2a depicts aspects of the creation of the model 110. Figure 2b depicts aspects of the creation of elements of the case-based reasoning database 130. Figure 2c depicts aspect of approaches for creating the model 110 by automatic learning.

The modelling arrangement 104 is adapted to determine the model 110 depending on the at least one rule.

The relational database 150 contains principles Pj and is linked to the corresponding action rule Rj in the rule-based model 120. For those, rules and principles have to be defined in the model 110.

The task of the modelling arrangement 110 is to link those fundamental rules with action a1, ..., an, context K1, ..., Km and likelihoods σ1, ..., σz which are related to executable test cases, e.g. video sequences, Radar or Lidar data sequences in the case-based reasoning data-base 130 and/or the relational data-base 140.

For this purpose, as depicted in Figure 2a, a human operator 20a may compile the model 110 and link the relations to the principles in the relational database 150 and the rules in the rule-based model 120 as well as test cases in case-based reasoning database 130 and/or the relational database 140.

The data structure of the model 110 is for example a set of links which can be in the form a matrix, a Rule-tree, e.g. according to fuzzy logic type II, or a net linking the multiple elements of the case-based reasoning data-base 130 and/or the relational data-base 140 with the principles.

This is a "white box" approach as the human operator has an overview and connects the test cases and principals manually due to his knowledge. The human operator may be assisted by a computer-aided system, which helps to establish and administrate the links.

In an example, a human operator 20a interacts with the modelling arrangement 104 to determine the model 110 based on knowhow about all relationships and sets the links and likelihoods.

Once the generated structure of the model 110 is decided, the case-based reasoning database 130 can be filled with multiple models of actions and with different contexts K1, ..., Km that can serve as test scenarios automatically.

For instance, one particular scenario comprising a playing child in different appearances such as "in sunset", "in rain", "in snow" can be automatically created.

Automatic learning by the learning arrangement 102 is described below with reference to Figure 2c. The learning arrangement 102 is in one example adapted to automatically create a Bayesian net based on database structure of the relational database 140 as well as the relational database 150 and the rule-based model 120.

The human operator 20a may structure the databases in actions and contexts and may suggest relations to principles and rules. In an exemplary machine learning approach, the human operator 20a is providing the relation database 140 with labeled scenarios. For instance, the relation database 140 can be manually pre-structured according to principles and an action description.

E.g., a video sequence for an action a1 is assigned "a child playing on the road"; a video sequence for an action a2 is assigned "a child behind a car". Other actions may be assigned alike.

When labels are used in the database scenarios, these relate to scenarios and principles of the rational database 150 and the rule-based model 120

The learning arrangement 102 deduces automatically, e.g. by an optimization algorithm, the concise relationships σI, ..., σz for all PI, ..., Pn and a1, ..., an of K1, ..., Km in terms of an automatically created e.g. trained Bayesian network for all training data e.g. all labeled scenario and all labeled principles. The learning arrangement 102 may train the Bayesian network based on labeled test cases contexts and/or actions as well. The learning arrangement 102 may reject concise or fuzzy test cases.

This is a "Black box" approach as the human operator 20a is only doing generic labeling and the learning arrangement 102 is deducing the relationship automatically.

The model 110 in the example correlates actions a1, ..., an in contexts K1, ..., Km with the probability distribution σ1, ..., σz indicating the relevance of the actions a1, ..., an in the contexts K1, ..., Km regarding test cases for testing whether the apparatus 160 operates according to a principle PI, ..., Pn or not.

The model 110 in the example defines an individual probability for an action in a context. In the example, the model 110 defines individual probabilities σ1, ..., σz for the same action in different contexts.

The model 110 is in one aspect created and implemented by indexing between PI, ..., Pn, a1, ... an, K1, ..., Km and σ1, ..., σz.

The model 110 relates to test cases in the case-based reasoning database 130 and the relational database 140, e.g. to video and other test data stored therein. The case-based reasoning database 130 and the relational database 140 are examples for databases, which contain executable test sequences in form of videos, Lidar, or Radar data sets, which are clearly labeled.

The learning arrangement 102 may learn the model 110 from scenario data, e.g. accident reports, or from a supervision of drivers, e.g. from data in a Black box of a vehicle.

The modelling arrangement 104 may create the model 110 based on known relationships, e.g. according to the white box or the black box approach.

The selecting arrangement 106 may be adapted to determine the test case * depending on a result of a comparison of at least one individual probability σ1, ..., σz with a threshold or with at least one other individual probability σ1, ..., σz. In particular, the test case with the comparably higher probability or with the highest of all probabilities is selected. By way of example, when the probability σIII=99% and the probability σz=3%, the test case with the probability σIII is used for testing.

The selecting arrangement 106 may be adapted to provide the test case for testing or not depending on the result of an overlay of a context for the test case with at least one general condition for the principle PI, ..., Pn.

The selecting arrangement 106 may be adapted to provide the test case for testing or not depending on the result of a correlation analysis of the model 110

The selecting arrangement 106 is in one aspect adapted to determine a plurality of test cases, for testing whether the apparatus 160 operates according to a principle or not, from actions and contexts for the at least partially autonomous apparatus depending on a reference rule. The selecting arrangement 106 is in one aspect adapted to determine the plurality of test cases depending on a probabilistic network or computational intelligence. The term probabilistic network refers to a probabilistic inference computation that is based e.g. on a Bayesian network representing the model 110. The term computational intelligence refers to a computation that is based on fuzzy logic type I or II, artificial neural networks or evolutionary computation representing the model 110.

The selecting arrangement 106 may be adapted to determine the plurality of test cases depending on input from the rule-based model 120, such as a fuzzy set model (type I or type II).

Alternatively, or additionally, the selecting arrangement 106 may be adapted to determine the plurality of test cases depending on input from the case-based reasoning database 130

The selecting arrangement 106 may be adapted to determine the test case * depending on the Bayesian network representing the model 110.

In another aspect, the selecting arrangement 106 is adapted to determine the test case * from the plurality of test cases depending on the probability distribution σ1, ..., σz.

The testing arrangement 108 is adapted to provide the test case * for testing at the at least partially autonomous apparatus 160. The testing arrangement 108 is adapted to determine a result of the testing.

The test case is for example defined depending on at least one control signal for the at least partially autonomous apparatus 160 or a component thereof. The test case may additionally or alternatively be defined depending on at least one sensor signal, in particular an audio signal, a video signal, a radar sensor signal, an ultrasonic sensor signal or a time of flight sensor signal.

Exemplary test cases for testing an at least partial autonomous vehicle may include a video signal indicating an action wherein a person at a side of a road is moving into a lane of a road. In this case, a plurality of contexts may be defined by different environmental properties, e.g. illumination of the scenario at a daytime, nighttime or at dawn. Likewise, different obstacles hiding the person at least partially may be arranged in the video signal at different locations for different contexts.

For these test cases, a general rule may be defined, in particular by expert knowledge, indicating different reactions that are expected for different contexts of a scenario. For example, the general rule "WHEN detecting a person at a side of a road THEN reduce speed" may be defined. Other more specific rules such as correlations of several rules or rules that reduce a parameter space may be defined as well.

Exemplary test cases for testing the at least partial autonomous vehicle may include another video signal indicating a traffic sign at different scenarios. Additionally, to different illumination of the scenario the traffic sign may be at least partially obfuscated by snow or trees in different contexts.

An exemplary rule for these test cases may be a general rule "WHEN detecting that an object is obfuscated at least partially THEN detect the object by its geometry".

For testing, the test case defines at least on action and context of a scenario for the testing. The testing arrangement 108 is adapted to provide the context for the testing. The testing arrangement 108 is adapted to determine a result of the testing depending on a comparison between the action and the reaction.

The testing arrangement 108 may be adapted to capture the reaction at the at least partially autonomous apparatus.

For self-learning, the learning arrangement 102 may be adapted to capture a reaction to the context at the at least partially autonomous apparatus and learn the model 110 accordingly.

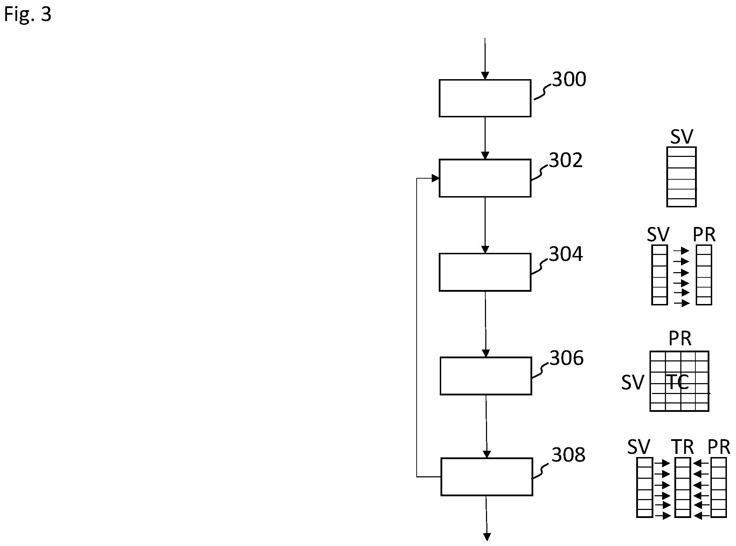

A method for test case generation is described with reference to figure 3.

The method includes aspects of self-learning of the model 110 that are optional in case the model has been previously trained.

In a step 300, scenarios for test cases and principles are provided. The scenarios and/or the principles may be labeled. The principles comprise a digital representation of one or more of a law, an accident report, a log, or human expertise or a combination thereof.

The input for determining the scenarios is for example a digital representation of Laws, accident reports, logs, human expertise.

These digital representations may be machine interpretable rules.

A linear independent Eigenspace of scenario vectors may be determined for the scenarios. A scenario vector SV defines for example correlations of actions a1, ..., an and contexts K1, ..., Km.

The scenario determination may comprise classification and clustering of scenarios that are suitable for testing a principle. The scenarios may be classified or clustered with statistical methods towards linear independent environmental variables.

A similarity between two scenarios may be determined. In this case, only one of the two scenarios may be used when a similarity between the two scenarios is detected. Otherwise, both scenarios may be used.

A prompt for user input may be determined in order to determine the similarity between two scenarios. In this case, only one of the scenarios may be used when a similarity between the two scenarios is detected from user input. Otherwise, both scenarios may be used.

Afterwards a step 302 is executed.

In step 302 at least one rule for test case generation is determined from the scenarios and the principles.

In the step 302 the at least one rule is determined for correlating actions a1, ..., an and contexts K1, ..., Km. The at least one rule is determined depending on at least one of the scenarios. The rule defines for example correlations of classes of actions and classes of contexts independent from the executable actions and contexts.

The at least one rule may be determined for each of the scenario vectors in the linear independent Eigenspace of scenario vectors. This means, the rule defines what response is expected at the apparatus 160. For example, for a person in front of a car the rule defines as reaction braking. A risk assignment of scenario vectors may be determined depending on laws and human expertise. A neural network, a fuzzy model (type I or type II) or a Bayesian networks may be determined based on probability and impact factors. For example, for some rule sun and rain together have low probability but have a high impact for testing a principle.

Afterwards a step 304 is executed.

Step 304 comprises determining, storing and/or outputting the model 110 for test case generation depending on the at least one rule.

The model 110 may be determined depending on the rules according to a modeling goal. The modeling goal is achieved when all principles and scenarios are covered.

The goal is achieved by determining links in the model for all rules for all scenarios and all principles to define how the at least partially autonomous apparatus or user thereof should react. A general rule may be determined to define an expected reaction for a scenario.

The general rule may be determined depending on a rule-based model, in particular a fuzzy set model (type I or type II).

Potential reactions for a car include e.g. braking when a person is detected in front of the car. A risk assignment of scenario vectors, SV, with an artificial neural network, a fuzzy logic (type I or type II) or a Bayesian network may provide the general rule based on probability and impact factors. For example, sun and rain together result in a low probability but high impact.

The output of the model 110 is for example a risk matrix mapping scenario vectors, SV, and principles, PR, to test cases TC according to a risk evaluation for the combinations thereof.

The model 110 can be a self-learned model or be previously defined depending on expert knowledge.

Afterwards an optional step 306 is executed.

In the step 306 a plurality of test cases is determined according to a selection goal. The selection goal achieved when effective test strategies are selected. In the example, a test case TC is defined by the model 110 depending on the rule.

The input for selecting the plurality of test cases in the example is the risk matrix mapping scenario vectors, SV, and principles PR to the test cases TC according to the risk evaluation.

The step 306 may comprise evaluating an applicability of scenarios to the at least partially autonomous apparatus, to an architecture or a structure thereof, and may comprise identifying appropriate test cases. E.g. a dynamic test is identified for a component change instead of a full system test. A test case in this context may be defined by the model 110 depending on the rule.

The output may be a minimum effective test case matrix including test cases TC.

Afterwards an optional step 308 is executed.

In the optional step 308, the testing arrangement 108 executes the test cases TC with the goal of transparency of the results reporting.

The input may be the minimum effective test matrix including the test cases TC.

The test cases TC are applied in the example from the minimum effective test matrix to the apparatus or a subsystem thereof. The results are determined and reported in an intelligible way, to make artificial intelligence and machine learning behaviors transparent e.g. to engineers, safety experts, policy makers.

The output of the testing may be an intelligible test and defect report with scenario towards test results, TR, versus expected outcome. The output may comprise the feedback to previous steps for supervised optimization. For example a feedback for closed loop supervised learning and improvement may be provided.

Afterwards the method ends or continues for further scenarios and principles with step 302 until the learning goal is achieved. The learning goal is for example achieved, when the scenarios are complete.

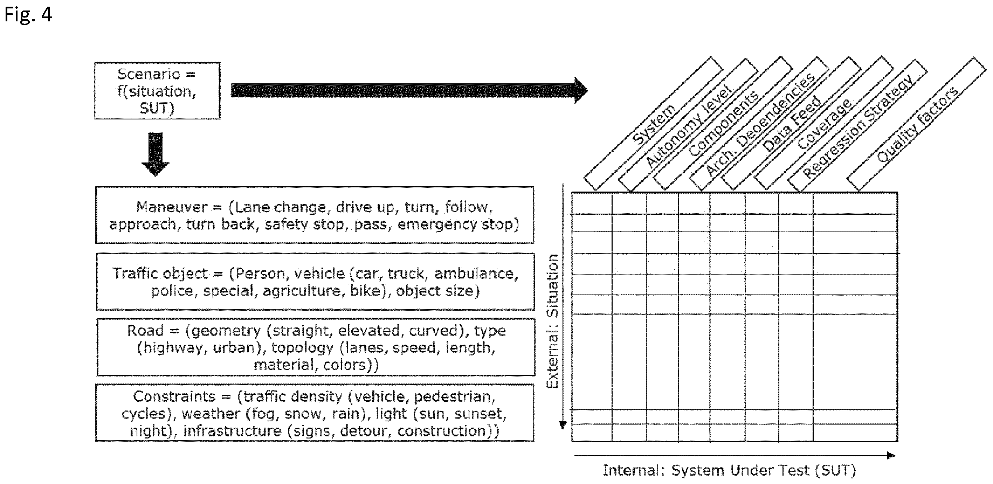

Exemplary scenarios for testing are depicted in figure 4. Figure 4 depicts the correlation of the scenarios to situations and a system under test (SUT).

A test-scenario is in the example a multi-dimensional mapping of linear independent Eigen-Values of external situations, combined with a selection of internal parameters depending on a test strategy and architecture of the SUT. This means a scenario is a function f(situation, SUT). The test-scenarios may be represented by the linear independent Eigenspace of scenario vectors (SV).

In figure 4 the following internal parameters are depicted at columns of a two-dimensional exemplary representation of the multi-dimensional mapping:
System,
Autonomy level,
Components,
Arch. Dependencies,
Data Feed,
Coverage,
Regression Strategy,
Quality factors.

The following exemplary external situations are depicted in figure 4 by way of a knowledge graph syntax grouping selectable elements hierarchically, where one or more elements between a pair of parenthesis with the lowest hierarchical level of each example form a group comprising elements that are selectable individually as external situation to define the scenario:
Maneuver = (Lane change, drive up, turn, follow, approach, turn back, safety stop, pass, emergency stop);
Traffic object = (Person, vehicle (car, truck, ambulance, police, special agriculture, bike), object size);
Road = (geometry, (straight, elevated, curved),
type(highway, urban), topology(lanes, speed, length, material, colors));
Constraints = (traffic density (vehicle, pedestrian, cycles), weather (fog, snow, rain), light (sun, sunset, night), infrastructure (signs, detour, constructions)).

A resulting scenario is for example synthesized in a signal or signals for testing the at least partially autonomous apparatus 160. Sensors at the at least partially autonomous apparatus 160 capture a response, i.e. reaction. The response may be used to learn a rule for actions or contexts depending on the leaves of the tree.

For testing the apparatus 160 or a component thereof, the at least partially autonomous apparatus 160 is presented actions in different contexts defined by the scenario. When the testing aims at validating that an operator of the at least partially autonomous apparatus 160 follows a certain rule, the at least partially autonomous apparatus 160 presents the operator with the actions in the contexts defined by the scenario and receives feedback from the operator.

This means that the device may be adapted for a dynamic validation, certification and homologation of the at least partially autonomous apparatus 160 in one aspect. In another aspect, the device may be adapted for testing and certifying an operator of the at least partially autonomous apparatus in particular for avoiding accidents.

## Claims

1. A device (100) for testing an at least partially autonomous apparatus or a component thereof, the device **characterized by** a learning arrangement (102) adapted to provide scenarios for test cases and principles to be tested, the principles comprising a digital representation of one or more of a law, an accident report, a log, or human expertise or a combination thereof, wherein the learning arrangement (102) is adapted to determine a plurality of rules for test case generation from the scenarios and the principles, and wherein the learning arrangement (102) is adapted to determine scenario vectors (SV) representing the scenarios, wherein each of the scenario vectors (SV) defines a rule for combining at least one action (a1, ..., an) with at least one context (K1, ..., Km), wherein the at least one action is an action that is presented to the at least partially autonomous apparatus or to the component thereof to prompt for a reaction, and wherein the at least one context refers to aspects of an environment and/or a situation in which the at least partially autonomous apparatus operates, and wherein a modelling arrangement (104) is adapted to determine, store and output a model (110) for test case generation depending on the plurality of rules.

2. The device (100) according to claim 1, wherein the learning arrangement (102) is adapted tc determine a linear independent Eigenspace of the scenario vectors (SV).

3. The device (100) according to claim 1 or 2, wherein the learning arrangement (102) is adapted to determine a plurality of test cases defined by the model (110) according to a selection goal.

4. The device (100) according to any one of the claims 1 to 3, wherein the learning arrangement (102) is adapted to determine a similarity between two scenarios and wherein the modelling arrangement (104) is adapted to determine, store and/or output the model (110) comprising only one of the two scenarios, when a similarity between the two scenarios is detected and to determine, store and/or output the model (110) comprising both otherwise.

5. The device (100) according to any one of the claims 1 to 4, wherein the learning arrangement (102) is adapted to prompt for user input to determine a similarity between two scenarios and wherein the modelling arrangement (104) is adapted to determine, store and/or output the model (110) comprising only one of the two scenarios when a similarity between the two scenarios is detected from user input and to determine, store and/or output the model (110) comprising both otherwise.

6. The device (100) according to one of the previous claims, wherein the modelling arrangement (104) is adapted to determine a test case (TC) defined by the model (110) depending on the rule.

7. The device (100) according to claim 6, wherein the test case (TC) is defined depending on at least one control signal for the at least partially autonomous apparatus or the component thereof, or depending on at least one sensor signal, in particular an audio signal, a video signal, a radar sensor signal, an ultrasonic sensor signal or a time of flight sensor signal.

8. A method for test case generation for an at least partially autonomous apparatus or a component thereof performed by a device (100), the device comprising a learning arrangement (102)and a modelling arrangement (104), the method **characterized by** providing (300), by the learning arrangement (102), scenarios for test cases and principles, the principles comprising a digital representation of one or more of a law, an accident report, a log, or human expertise or a combination thereof, determining (302), by the learning arrangement (102), a plurality of rules for test case generation from the scenarios and the principles, and determining (300), by the learning arrangement (102), scenario vectors (SV) representing the scenarios, wherein each of the scenario vectors (SV) defines a rule for combining at least one action (a1, ..., an) with at least one context (K1, ..., Km), wherein the at least one action is an action that is presented to the apparatus or to the component thereof to prompt for a reaction, and wherein the at least one context refers to aspects of an environment and/or a situation in which the at least partially autonomous apparatus operates, and determining, storing and outputting (304)by the modelling arrangement (104), a model (110) for test case generation depending on the plurality of rules.

9. The method according to claim 8, comprising determining (300), by the learning arrangement (102), a linear independent Eigenspace of the scenario vectors (SV).

10. The method according to claim 8 or 9, comprising determining (300), by the learning arrangement (102), a plurality of test cases defined by the model (110) according to a selection goal.

11. The method according to any one of the claims 8 to 10, comprising determining (300), by the learning arrangement (102), a similarity between two scenarios and determining, storing and/or outputting the model (110), by the modelling arrangement (104), comprising only one of the two scenarios, when a similarity between the two scenarios is detected and determining, storing and/or outputting the model (110), by the modelling arrangement (104), comprising both otherwise.

12. The method according to any one of the claims 8 to 11, comprising prompting (300), by the learning arrangement (102), for user input to determine a similarity between two scenarios and determining, storing and/or outputting the model (110), by the modelling arrangement (104), comprising only one of the two scenarios when a similarity between the two scenarios is detected from user input and determining, storing and/or outputting the model (110), by the modelling arrangement (104), comprising both otherwise.

13. The method according to any one of the claims 8 to 12, comprising determining (306), by the learning arrangement (102), a test case (TC) defined by the model (110) depending on the rule.

14. The method according to claim 13, wherein the test case (TC) is defined depending on at least one control signal for the at least partially autonomous apparatus or the component thereof, or depending on at least one sensor signal, in particular an audio signal, a video signal, a radar sensor signal, an ultrasonic sensor signal or a time of flight sensor signal.

## Patentansprüche

1. Vorrichtung (100) zum Testen einer zumindest teilweise autonomen Einrichtung oder einer Komponente davon, wobei die Vorrichtung **gekennzeichnet ist durch** eine Lernanordnung (102), die dafür ausgelegt ist, um Szenarien für Testfälle und zu testende Prinzipien bereitzustellen, wobei die Prinzipien eine digitale Darstellung von einem oder mehreren aus einem Gesetz, einem Unfallbericht, einem Protokoll oder menschlichem Fachwissen oder einer Kombination davon umfassen, wobei die Lernanordnung (102) dafür ausgelegt ist, um aus den Szenarien und den Prinzipien eine Vielzahl von Regeln zur Testfallerzeugung zu ermitteln, und wobei die Lernanordnung (102) dafür ausgelegt ist, um die Szenarien repräsentierende Szenariovektoren (SV) zu ermitteln, wobei jeder der Szenariovektoren (SV) eine Regel zum Kombinieren mindestens einer Aktion (a1, ..., an) mit mindestens einem Kontext (K1, ..., Km) definiert, wobei die mindestens eine Aktion eine Aktion ist, die der zumindest teilweise autonomen Einrichtung oder deren Komponente präsentiert wird, um eine Reaktion zu veranlassen, und wobei sich der mindestens eine Kontext auf Aspekte einer Umgebung und/oder einer Situation bezieht, in der die zumindest teilweise autonome Einrichtung arbeitet, und wobei eine Modellierungsanordnung (104) dafür ausgelegt ist, um in Abhängigkeit von der Vielzahl von Regeln ein Modell (110) zur Testfallerzeugung zu ermitteln, zu speichern und auszugeben.

2. Vorrichtung (100) nach Anspruch 1, wobei die Lernanordnung (102) dafür ausgelegt ist, um einen linearen unabhängigen Eigenraum der Szenariovektoren (SV) zu ermitteln.

3. Vorrichtung (100) nach Anspruch 1 oder 2, wobei die Lernanordnung (102) dafür ausgelegt ist, um eine Vielzahl von durch das Modell (110) definierten Testfällen gemäß einem Auswahlziel zu ermitteln.

4. Vorrichtung (100) nach einem der Ansprüche 1 bis 3, wobei die Lernanordnung (102) dafür ausgelegt ist, um eine Ähnlichkeit zwischen zwei Szenarien zu ermitteln, und wobei die Modellierungsanordnung (104) dafür ausgelegt ist, um das Modell (110) zu ermitteln, zu speichern und/oder auszugeben, das nur eines der beiden Szenarien umfasst, wenn eine Ähnlichkeit zwischen den beiden Szenarien erkannt wird, und andernfalls das Modell (110) zu ermitteln, zu speichern und/oder auszugeben, das beide umfasst.

5. Vorrichtung (100) nach einem der Ansprüche 1 bis 4, wobei die Lernanordnung (102) dafür ausgelegt ist, um zu einer Benutzereingabe aufzufordern, um eine Ähnlichkeit zwischen zwei Szenarien zu ermitteln, und wobei die Modellierungsanordnung (104) dafür ausgelegt ist, um das Modell (110) zu ermitteln, zu speichern und/oder auszugeben, das nur eines der beiden Szenarien umfasst, wenn aus der Benutzereingabe eine Ähnlichkeit zwischen den beiden Szenarien erkannt wird, und andernfalls das Modell (110) zu ermitteln, zu speichern und/oder auszugeben, das beide umfasst.

6. Vorrichtung (100) nach einem der vorstehenden Ansprüche, wobei die Modellierungsanordnung (104) dafür ausgelegt ist, um in Abhängigkeit von der Regel einen durch das Modell (110) definierten Testfall (TC) zu ermitteln.

7. Vorrichtung (100) nach Anspruch 6, wobei der Testfall (TC) in Abhängigkeit von mindestens einem Steuersignal für die zumindest teilweise autonome Einrichtung oder deren Komponente oder in Abhängigkeit von mindestens einem Sensorsignal, insbesondere einem Audiosignal, einem Videosignal, einem Radarsensorsignal, einem Ultraschallsensorsignal oder einem Laufzeitsensorsignal, definiert ist.

8. Verfahren zur Testfallerzeugung für eine mindestens teilweise autonome Einrichtung oder eine Komponente davon, das durch eine Vorrichtung (100) durchgeführt wird, wobei die Vorrichtung eine Lernanordnung (102) und eine Modellierungsanordnung (104) umfasst, wobei das Verfahren **gekennzeichnet ist durch** Bereitstellen (300), durch die Lernanordnung (102), von Szenarien für Testfälle und Prinzipien, wobei die Prinzipien eine digitale Darstellung von einem oder mehreren aus seinem Gesetz, einem Unfallbericht, einem Protokoll oder menschlichem Fachwissens oder einer Kombination davon umfassen, Ermitteln (302), durch die Lernanordnung (102), einer Vielzahl von Regeln zur Testfallerzeugung aus den Szenarien und den Prinzipien, und Ermitteln (300), durch die Lernanordnung (102), von Szenariovektoren (SV), die die Szenarien darstellen, wobei jeder der Szenariovektoren (SV) eine Regel zum Kombinieren mindestens einer Aktion (a1, ..., an) mit mindestens einem Kontext (K1, ..., Km) definiert, wobei die mindestens eine Aktion eine Aktion ist, die der Einrichtung oder deren Komponente präsentiert wird, um eine Reaktion zu veranlassen, und wobei sich der mindestens eine Kontext auf Aspekte einer Umgebung und/oder einer Situation bezieht, in der die mindestens teilweise autonome Einrichtung arbeitet, und Ermitteln, Speichern und Ausgeben (304) eines Modells (110) zur Testfallerzeugung durch die Modellierungsanordnung (104) in Abhängigkeit von der Vielzahl von Regeln.

9. Verfahren nach Anspruch 8, das das Ermitteln (300), durch die Lernanordnung (102), eines linearen unabhängigen Eigenraums der Szenariovektoren (SV) umfasst.

10. Verfahren nach Anspruch 8 oder 9, das das Ermitteln (300), durch die Lernanordnung (102), einer Vielzahl von Testfällen, die durch das Modell (110) definiert sind, gemäß einem Auswahlziel umfasst.

11. Verfahren nach einem der Ansprüche 8 bis 10, das das Ermitteln (300), durch die Lerneinordnung (102), einer Ähnlichkeit zwischen zwei Szenarien und das Ermitteln, Speichern und/oder Ausgeben, durch die Modellierungsanordnung (104), des Modells (110) umfasst, das nur eines der beiden Szenarien umfasst, wenn eine Ähnlichkeit zwischen den beiden Szenarien erkannt wird, und andernfalls das Ermitteln, Speichern und/oder Ausgeben, durch die Modellierungsanordnung (104), des Modells (110) umfasst, das beide umfasst.

12. Verfahren nach einem der Ansprüche 8 bis 11, das das Auffordern (300), durch die Lernanordnung (102), zu einer Benutzereingabe zum Ermitteln einer Ähnlichkeit zwischen zwei Szenarien und das Ermitteln, Speichern und/oder Ausgeben, durch die Modellierungsanordnung (104), des Modells (110) umfasst, das nur eines der beiden Szenarien umfasst, wenn aus der Benutzereingabe eine Ähnlichkeit zwischen den beiden Szenarien erkannt wird, und andernfalls das Ermitteln, Speichern und/oder Ausgeben, durch die Modellierungsanordnung (104), des Modells (110) umfasst, das beide umfasst.

13. Verfahren nach einem der Ansprüche 8 bis 12, das das Ermitteln (306), durch die Lernanordnung (102), eines durch das Modell (110) definierten Testfalls (TC) in Abhängigkeit von der Regel umfasst.

14. Verfahren nach Anspruch 13, wobei der Testfall (TC) in Abhängigkeit von mindestens einem Steuersignal für die mindestens teilweise autonome Einrichtung oder deren Komponente oder in Abhängigkeit von mindestens einem Sensorsignal, insbesondere einem Audiosignal, einem Videosignal, einem Radarsensorsignal, einem Ultraschallsensorsignal oder einem Laufzeitsensorsignal, definiert ist.

## Revendications

1. Dispositif (100) pour le test d'un appareil au moins partiellement autonome ou de l'un de ses composants, le dispositif étant **caractérisé par** un système d'apprentissage (102) adapté pour fournir des scénarios pour des cas de test et des principes à tester, les principes comprenant une représentation numérique d'un ou de plusieurs parmi une loi, un rapport d'accident, un journal ou une expertise humaine ou une combinaison de ceux-ci, dans lequel le système d'apprentissage (102) est adapté pour déterminer une pluralité de règles pour la génération de cas de test à partir des scénarios et des principes, et dans lequel le système d'apprentissage (102) est adapté pour déterminer des vecteurs de scénarios (SV) représentant les scénarios, dans lequel chacun des vecteurs de scénarios (SV) définit une règle pour combiner au moins une action (a1, ..., an) avec au moins un contexte (K1, ..., Km), dans lequel l'au moins une action est une action qui est présentée à l'appareil au moins partiellement autonome ou à son composant pour susciter une réaction, et dans lequel l'au moins un contexte se réfère à des aspects d'un environnement et/ou d'une situation dans lesquels l'appareil au moins partiellement autonome fonctionne, et dans lequel un système de modélisation (104) est adapté pour déterminer, stocker et produire un modèle (110) pour la génération de cas de test en fonction de la pluralité de règles.

2. Dispositif (100) selon la revendication 1, dans lequel le système d'apprentissage (102) est adapté pour déterminer un espace propre indépendant linéaire des vecteurs de scénarios (SV).

3. Dispositif (100) selon la revendication 1 ou 2, dans lequel le système d'apprentissage (102) est adapté pour déterminer une pluralité de cas de test définis par le modèle (110) en fonction d'un objectif de sélection.

4. Dispositif (100) selon l'une quelconque des revendications 1 à 3, dans lequel le système d'apprentissage (102) est adapté pour déterminer une similitude entre deux scénarios et dans lequel le système de modélisation (104) est adapté pour déterminer, stocker et/ou produire le modèle (110) comprenant seulement l'un des deux scénarios lorsqu'une similitude entre les deux scénarios est détectée et pour déterminer, stocker et/ou produire le modèle (110) comprenant les deux dans le cas contraire.

5. Dispositif (100) selon l'une quelconque des revendications 1 à 4, dans lequel le système d'apprentissage (102) est adapté pour demander une entrée utilisateur pour déterminer une similitude entre deux scénarios et dans lequel le système de modélisation (104) est adapté pour déterminer, stocker et/ou produire le modèle (110) comprenant seulement l'un des deux scénarios lorsqu'une similitude entre les deux scénarios est détectée à partir de l'entrée utilisateur et pour déterminer, stocker et/ou système le modèle (110) comprenant les deux dans le cas contraire.

6. Dispositif (100) selon l'une quelconque des revendications précédentes, dans lequel le système de modélisation (104) est adapté pour déterminer un cas de test (TC) défini par le modèle (110) en fonction de la règle.

7. Dispositif (100) selon la revendication 6, dans lequel le cas de test (TC) est défini en fonction d'au moins un signal de commande pour l'appareil au moins partiellement autonome ou son composant, ou en fonction d'au moins un signal de capteur, en particulier un signal audio, un signal vidéo, un signal de capteur radar, un signal de capteur ultrasonique ou un signal de capteur de temps de vol.

8. Procédé pour la génération de cas de test pour un appareil au moins partiellement autonome ou l'un de ses composants exécuté par un dispositif (100), le dispositif comprenant un système d'apprentissage (102) et un système de modélisation (104), le procédé étant **caractérisée par** la fourniture (300), par le système d'apprentissage (102), de scénarios pour des cas de test et des principes, les principes comprenant une représentation numérique d'un ou de plusieurs parmi une loi, un rapport d'accident, un journal, une expertise humaine ou une combinaison de ceux-ci, la détermination (302), par le système d'apprentissage (102), d'une pluralité de règles pour la génération de cas de test à partir des scénarios et des principes, et la détermination (300), par le système d'apprentissage (102), de vecteurs de scénarios (SV) représentant les scénarios, dans lequel chacun des vecteurs de scénarios (SV) définit une règle pour combiner au moins une action (a1, .., an) avec au moins un contexte (K1, ..., Km), dans lequel l'au moins une action est une action qui est présentée à l'appareil ou à son composant pour susciter une réaction, et dans lequel l'au moins un contexte se réfère à des aspects d'un environnement et/ou d'une situation dans lesquels l'appareil au moins partiellement autonome fonctionne, et la détermination, le stockage et la production (304) par le système de modélisation (104) d'un modèle (110) pour la génération de cas de test en fonction de la pluralité de règles.

9. Procédé selon la revendication 8, comprenant la détermination (300), par le système d'apprentissage (102), d'un espace propre linéaire indépendant des vecteurs de scénarios (SV).

10. Procédé selon la revendication 8 ou 9, comprenant la détermination (300), par le système d'apprentissage (102), d'une pluralité de cas de test définis par le modèle (110) en fonction d'un objectif de sélection.

11. Procédé selon l'une quelconque des revendications 8 à 10, comprenant la détermination (300), par le système d'apprentissage (102), d'une similitude entre deux scénarios et la détermination, le stockage et/ou la production du modèle (110), par le système de modélisation (104), comprenant seulement l'un des deux scénarios lorsqu'une similitude entre les deux scénarios est détectée et la détermination, le stockage et/ou la production du modèle (110), par le système de modélisation (104), comprenant les deux dans le cas contraire.

12. Procédé selon l'une quelconque des revendications 8 à 11, comprenant la demande (300), par le système d'apprentissage (102), d'une entrée utilisateur pour déterminer une similitude entre deux scénarios et la détermination, le stockage et/ou la production du modèle (110), par le système de modélisation (104), comprenant seulement l'un des deux scénarios lorsqu'une similitude entre les deux scénarios est détectée à partir de l'entrée utilisateur et la détermination, le stockage et/ou la production du modèle (110), par le système de modélisation (104), comprenant les deux dans le cas contraire.

13. Procédé selon l'une quelconque des revendications 8 à 12, comprenant la détermination (306), par le système d'apprentissage (102), d'un cas de test (TC) défini par le modèle (110) en fonction de la règle.

14. Procédé selon la revendication 13, dans lequel le cas de test (TC) est défini en fonction d'au moins un signal de commande pour l'appareil au moins partiellement autonome ou son composant, ou en fonction d'au moins un signal de capteur, en particulier un signal audio, un signal vidéo, un signal de capteur radar, un signal de capteur ultrasonique ou un signal de capteur de temps de vol.
